# EUROPÄISCHE PATENTANMELDUNG

(11) **EP 0 602 575 A2**
(43) Veröffentlichungstag der Anmeldung: **22.06.1994**
(21) Anmeldenummer: 93120048.9
(22) Anmeldetag: 13.12.1993
(51) Int. Cl.: B65D 6/22

(54) **Zusammenklappbarer Transportbehälter als Mehrwegverpackung**

(30) Priorität: 17.12.1992 DE 4242679
(71) Anmelder: Gebr. OTTO KG, D-57223 Kreuztal (DE)
(72) Erfinder: Schafhausen, Ulrich Otto, D-50996 Köln (DE); Kessler, Volker, D-57223 Kreuztal (DE)
(74) Vertreter: COHAUSZ HASE DAWIDOWICZ & PARTNER

(57) **Zusammenfassung**

Die Erfindung betrifft einen Zusammenklappbarer Transportbehälter in Quaderform insbesondere als Mehrwegtransportverpackung mit einem Boden (1), einem Deckel (2) und mindestens einem zwischen Boden und Deckel lösbar befestigbaren, die Seitenwände bildenden Klapprahmen (3), dessen Inneres eine Öffnung (5) bildet, deren Querschnitt dem waagerechten Innenquerschnitt des Behälters entspricht, wobei der Klapprahmen einen Grundrahmen (4) mit geringer Bauhöhe aufweist, dessen Außenseiten etwa innerhalb der senkrechten Außenseiten des Behälters liegen und an dem Seitenwände (7) angelenkt sind, die bei gefülltem Behälter senkrecht stehen und bei leerem Behälter jeweils nach innen in eine waagerechte Lage geklappt sind.

## Beschreibung

Die Erfindung betrifft einen zusammenklappbaren Transportbehälter in Quaderform insbesondere als Mehrwegtransportverpackung mit einem Boden, einem Deckel und mindestens einem zwischen Boden und Deckel lösbar befestigbaren, die Seitenwände bildenden Klapprahmen, dessen Inneres eine Öffnung bildet, deren Querschnitt dem waagerechten Innenquerschnitt des Behälters entspricht.

Es sind Behälter als Mehrwegtransportverpackungen bekannt, bei denen zwischen einem Boden und einem Deckel ein oder mehrere Rahmen gesetzt werden, so daß die Höhe des Behälters variabel ist. Die Rahmen bestehen aus mehreren aneinander angelenkten Teilen, wobei die Gelenkachsen beim Behälter im aufgebauten Zustand senkrecht stehen. Um einen Behälter mit etwas größerer Höhe zu schaffen, müssen mehrere Rahmen aufeinander gesetzt werden, wodurch die Stabilität des Behälters sich verringert. Ferner bilden die Teile im zusammengeklappten Zustand keine feste Einheit, sondern die zusammengeklappten Rahmen liegen lose zwischen Boden und Deckel ein. Auch sind im aufgestellten Zustand die Teile nicht aneinander fest, so daß außen um den Behälter Bänder gelegt werden müssen, damit eine stabile Einheit entsteht.

Aufgabe der Erfindung ist es, einen Behälter der eingangs genannten Art so zu verbessern, daß bei einfacher Konstruktion und Handhabung mit bereits einem einzigen zwischengesetzten Klapprahmen eine ausreichende Höhe des Behälters erreicht wird, wobei im zusammengeklappten Zustand alle Teile formschlüssig aneinander halten.

Diese Aufgabe wird erfindungsgemäß dadurch gelöst, daß der Klapprahmen einen Grundrahmen mit geringer Bauhöhe aufweist, dessen Außenseiten etwa innerhalb der senkrechten Außenseiten des Behälters liegen und an dem Seitenwände angelenkt sind, die bei gefülltem Behälter senkrecht stehen und bei leerem Behälter jeweils nach innen in eine waagerechte Lage geklappt sind.

Aufgrund der am Grundrahmen angelenkten Seitenwände wird im auseinandergeklappten Zustand ein Zwischenrahmen erhalten, der bereits eine erhebliche Bauhöhe aufweist, so daß in der Regel ein einziger Zwischenrahmen ausreicht, um einen Behälter ausreichender Höhe zu erhalten. Dennoch können mehrere Zwischenrahmen, bzw. Klapprahmen aufeinander gesetzt werden, um beidseitig durch zwei Deckel oder durch zwei Böden, oder durch einen Deckel und einen Boden abgeschlossen zu werden.

Besonders vorteilhaft ist es hierbei, daß im zusammengeklappten Zustand des Klapprahmens dieser zwischen den Deckeln bzw. Böden formschlüssig gehalten ist und damit der Behälter im zusammmengeklappten Zustand eine Einheit ohne lose Teile bildet. Hierbei weist der Behälter wenig Teile auf und er ist von einfacher Konstruktion und Handhabung.

Von Vorteil ist, daß die Seitenwände am Grundrahmen oben und/oder unten angelenkt sind. Auch ist von größtem Vorteil, daß die vier Seiten des Grundrahmens in den Ecken aneinander unbeweglich fest sind.

Vorzugsweise wird vorgeschlagen, daß der Boden mit seiner Oberseite an der Unterseite des Grundrahmens und mit seiner Unterseite an der Oberseite des Deckels oder der Oberseite des aufgeklappten Klapprahmens formschlüssig lösbar befestigbar ist. Gleich vorteilhaft ist es auch, wenn der Deckel mit seiner Unterseite an der Oberseite des aufgeklappten als auch des zugeklappten Klapprahmens formschlüssig lösbar befestigbar ist. Hierbei kann der Deckel mit einer auf der Unterseite am Rand angeordneten Nut die oberen Ränder der aufgeklappten Seitenränder übergreifen. Auch ist hierbei von Vorteil, wenn der Deckel mit seiner Nut ein Inlay übergreift, das mit seinen Rändern über die oberen Ränder der aufgeklappten Seitenwände gelegt ist.

Eine hohe Variabilität wird auch dadurch erreicht, daß der Deckel mit seiner Oberseite an der Unterseite des Bodens formschlüssig lösbar befestigbar ist. Ferner wird hierzu vorgeschlagen, daß der Grundrahmen mit seiner Unterseite an der Oberseite des Bodens und an der Oberseite eines zweiten Grundrahmens in dessen aufgeklappten und zusammengeklappten Zustand formschlüssig lösbar befestigbar ist.

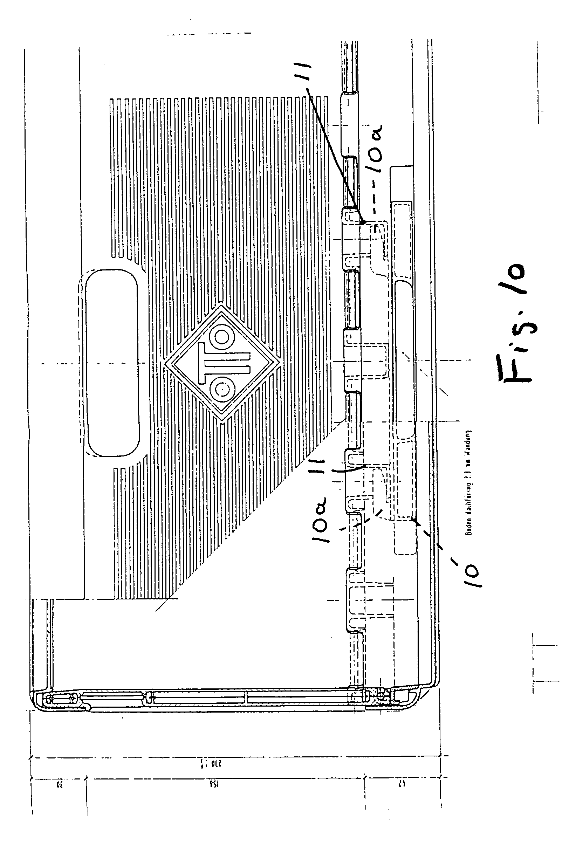

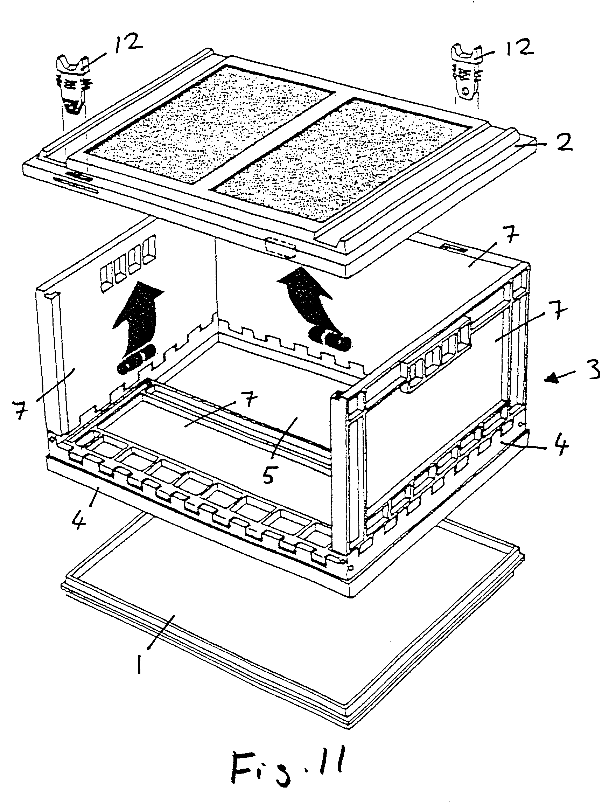

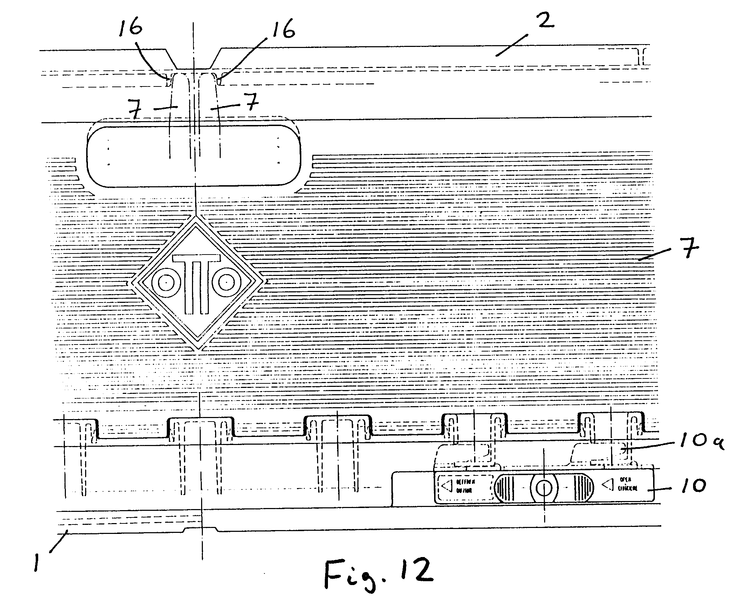

In einer besonders vorteilhaften Alternative wird vorgeschlagen, daß zwischen Boden und Deckel, zwischen zwei Böden und/oder zwischen zwei Deckeln ein Grundrahmen ohne klappbare Seitenwände aus Kunststoff und/oder Pappe formschlüssig einsetzbar ist. (Figuren 8, 9).

Um im aufgebauten Zustand außen nicht Bänder anbringen zu müssen, wird vorgeschlagen, daß mindestens eine der lösbaren Verbindungen eine Verriegelung aufweist.

Hierbei kann die Verriegelung ein waagerecht bewegliches Schiebeelement aufweisen, das mit mindestens einem vorstehendem Hakenteil einen Bereich des anliegenden festzumachenden Behälterteils hintergreift. (Figur 10). Alternativ oder zusätzlich wird vorgeschlagen, daß mindestens eine der lösbaren Verbindungen ein stift- oder plattenförmiges Einsteckteil aufweist. Ferner ist auch von Vorteil, wenn mindestens eine der lösbaren Verbindungen eine Klammer aufweist.

Fü die Konstruktion der Seitenwände wird vorgeschlagen, daß die Seitenwände, der Boden und/oder der Deckel außen Rippen aufweisen. Hierdurch wird bei einfacher Konstruktion eine hohe Stabilität erreicht. Alternativ wird hierzu auch vorgeschlagen, daß die Seitenwände, der Boden und/oder der Deckel doppelwandig sind. Hierdurch werden beidseitig glatte Außenseiten der Wände erhalten.

Besonders vorteilhaft ist es zum Stapeln verschieden großer Behälter, daß die Unterseite des Deckels paarweise Vorsprünge, insbesondere Stege aufweist, zwischen denen die oberen Ränder von Seitenwänden darunterliegender Behälter formschlüssig einliegen.

Mehrere Ausführungsbeispiele der Erfindung sind in den Zeichnungen dargestellt und werden im folgenden näher beschrieben. Es zeigen:
- Figur 1:: Eine perspektivische Darstellung des Behälters mit abgesenktem Boden und angehobenem Deckel.
- Figur 2:: Einen Ausschnitt aus einem senkrechten Schnitt durch zwei aufeinanderstehende, aufgeklappte Behälter, wobei der obere Behälter mit seinem Boden auf dem Deckel des unteren Behälters formschlüssig aufsitzt.
- Figur 3:: Einen Ausschnitt aus einem senkrechten Schnitt durch zwei aufeinanderstehende Behälter, wobei der untere Behälter keinen Deckel aufweist, so daß der Boden des oberen Behälters in der oberen Öffnung des unteren Behälters formschlüssig einsitzt.
- figur 4:: Einen Bereich eines senkrechten Schnitts durch einen zusammengeklappten Behälter mit Boden und Deckel.
- Figur 5:: Einen senkrechten Schnitt durch einen zusammengeklappten Behälter, der zwei Rahmen aufweist.
- Figur 6:: Einen senkrechten Teilschnitt im Bereich zweier aufeinanderstehender, ausgeklappter Klapprahmen.
- Figur 7:: Einen Schnitt im oberen Bereich eines aufgeklappten Behälters, bei dem der Deckel ein Inlay hält, das zwischen Deckel und Seitenwand festgeklemmt ist.
- Figur 8:: Einen senkrechten Schnitt durch einen Behälter, der statt des Klapprahmens einen feststehenden Zwischenrahmen aufweist, der an der Ober- und Unterseite durch je einen Boden verschlossen ist.
- Figur 9:: Einen Schnitt ähnlich Figur 8, wobei die Oberseite durch einen Deckel verschlossen ist.
- Figur 10:: Einen Ausschnitt aus einem senkrechten Schnitt durch einen Behälter im Bodenbereich mit einem Schiebeelement zur Verriegelung.
- Figur 11:: Eine perspektivische Darstellung ähnlich Figur 1 mit Steckelementen zur Verriegelung des Deckels an den aufgeklappten Wänden oder anderen Teilen.
- Figur 12:: Eine Seitenansicht des Behälters im Ausschnitt, mit Rippen an der Deckelunterseite.

Der Behälter weist einen Boden 1, einen Deckel 2 und einen oder mehrere dazwischen gesetzte Klapprahmen 3 auf. Der Deckel 2 kann auch durch einen Boden 1 und der Boden 1 durch einen Deckel 2 ersetzt werden.

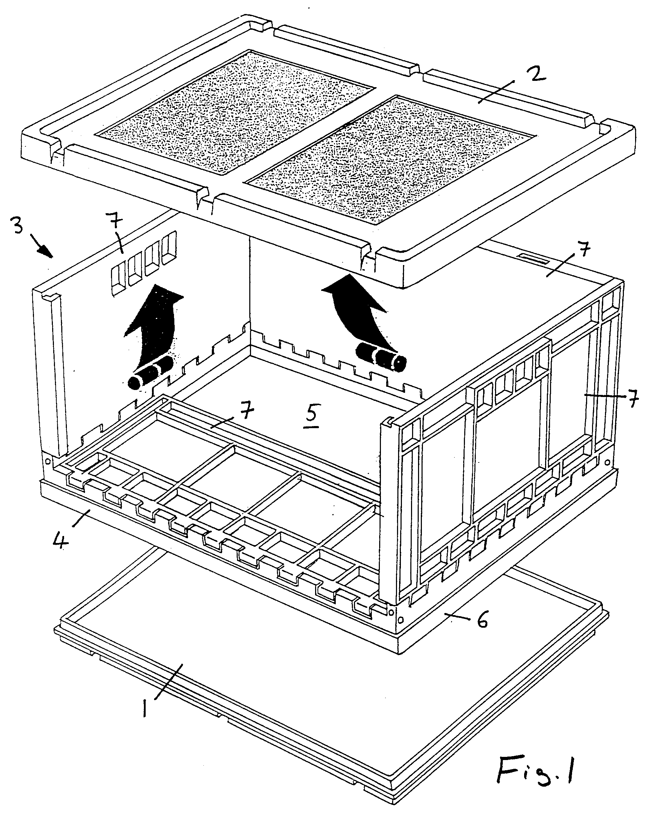

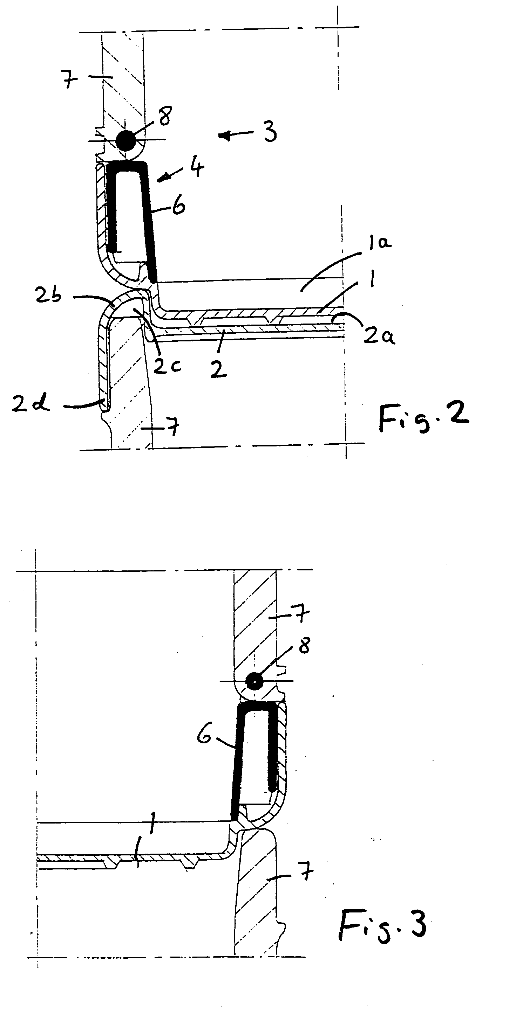

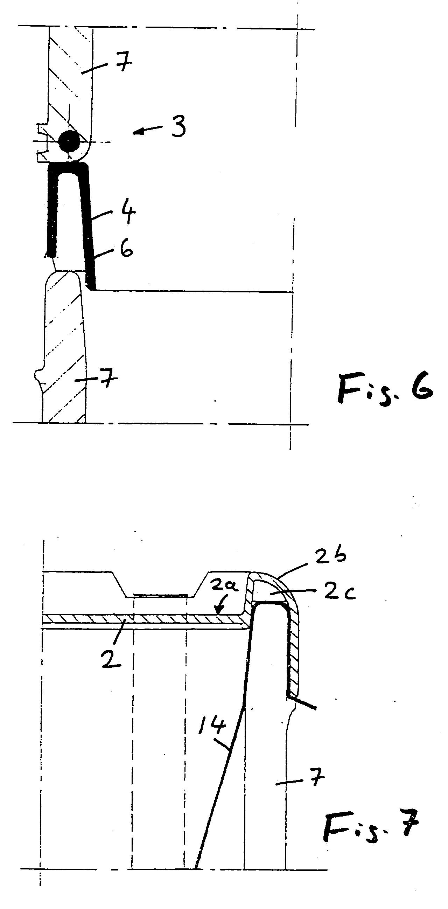

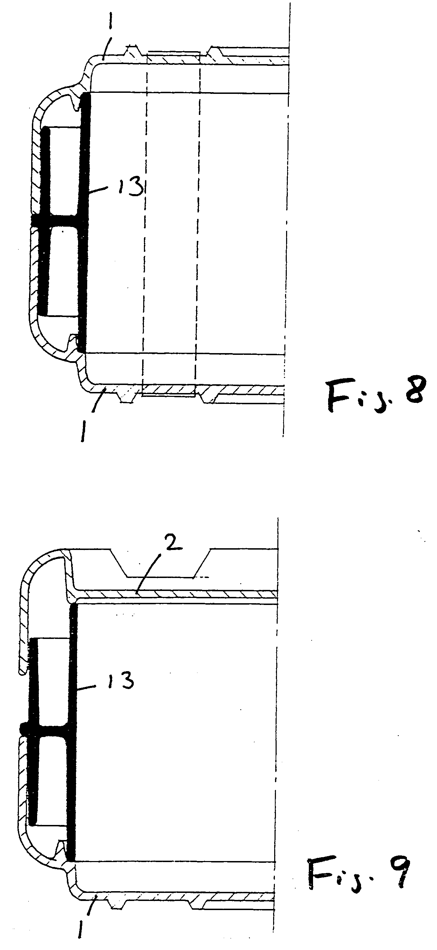

Der Klapprahmen 3 weist einen waagerechten, nicht klappbaren Grundrahmen 4 auf, der eine rechteckförmige waagerechte Öffnung 5 umschließt. Der Grundrahmen weist vorzugsweise ein rechteckförmiges Profil 6 auf, das im Ausführungsbeispiel, siehe Figur 2 bis 7, einen Querschnitt in Form eines auf dem Kopf stehenden U's besitzt. Das Profil 6 bildet somit die vier Seiten des Grundrahmens 4 und sowohl auf den beiden Längsseiten als auch auf den beiden Querseiten ist auf der Oberseite jeden Profils eine Seitenwand 7 angelenkt, wobei die jeweilige Anlenkachse waagerecht und parallel zum Profil 6 verläuft. Durch diese Anlenkstellen 8 sind die vier Seitenwände 7 aus der senkrechten Stellung in die waagerechte Stellung nach innen klappbar, so daß im zusammengeklappten Zustand der Grundrahmen und die vier Seitenwände eine rechteckförmige Schicht geringer Höhe bilden. Auf diese Schicht kann dann auf die Unter- und Oberseite jeweils ein Boden, bzw. ein Deckel gesetzt werden, so daß im zusammengeklappten Zustand alle Teile eine feste, stabile Einheit bilden.

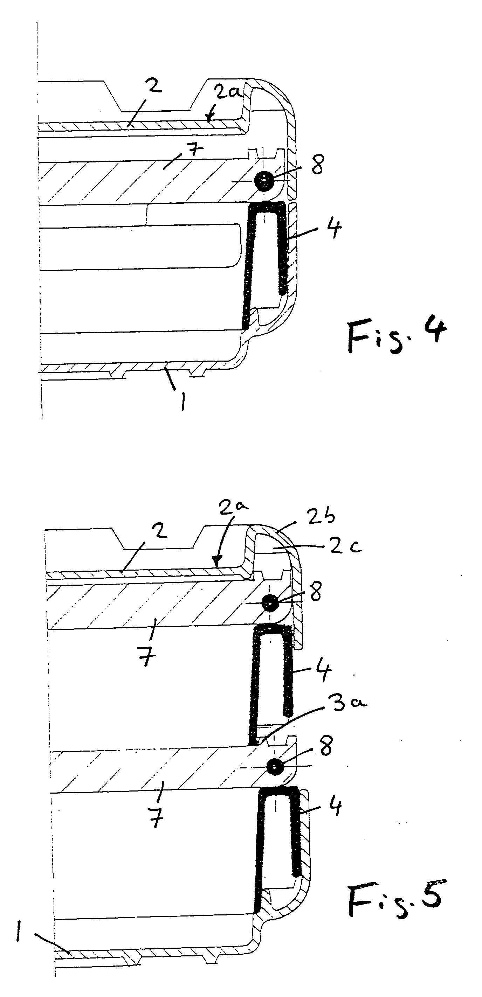

Bei allen Teilen ist dafür gesorgt, daß sie zueinander passende Vorsprünge/Stufen und Rücksprünge/entgegengesetzte Stufen/Ausnehmungen aufweisen, die formschlüssig ineinanderpassen, so daß alle Teile aneinander Halt finden, sowohl im aufgeklappten als auch im zusammengeklappten Zustand, wie in den Figuren 2 bis 7 gezeigt ist:
An der Unterseite des nach unten offenen Profils 6 ist der Boden 1 mit seinen Rändern formschlüssig gehalten, wobei der wannenförmige Boden 1 mit seinen senkrechten Seitenwänden das Profil 6 außen umgreift, siehe Figur 2 bis 5. Die Unterseite des Bodens 1 bildet einen wannenförmigen Vorsprungsbereich 1a, der nach unten vorsteht und in einer wannenförmigen Ausnehmung 2a entsprechend der Form des Deckels 2 zur Einlage gelangt, siehe Figur 2. Alternativ kann aber auch der Boden 1 in der oberen Öffnung eines darunterliegenden ausgeklappten Behälters zwischen den oberen Kanten der Seitenwände 7 formschlüssig einliegen, siehe Figur 3.

Der Deckel 2 weist an seiner Oberseite einen außen rundum umlaufenden Wulst 2b auf, der als rechteckförmiger Rand den Bereich 1a des Bodens 1 umfaßt. Dieser Wulst 2b bildet an seiner Unterseite eine außen umlaufende Nut 2c, die die oberen Ränder der Deckel 2 formschlüssig umgreift. Hierbei ist die Außenwand der Nut 2c weiter nach unten geführt und bildet einen senkrechten umlaufenden Seitenwandbereich 2d, der die Außenseite der senkrechten Seitenwand 7 außen umfaßt. Dieser Bereich 2d umfaßt darüberhinaus die Seitenwände auch im eingeklappten Zustand, siehe Figur 4 und 5. Ferner kann über den oberen Rand der senkrecht stehenden Wände 7 ein Inlay (Figur 7) gelegt werden, das von der Nut 2c des Deckels 2 übergriffen und festgehalten wird.

Im zusammengelegtem bzw. eingeklapptem Zustand der Wände 7 bildet die Außenseite bzw. Oberseite der Seitenwand 7 mindestens einen nach oben stehenden Wulst 3a, nahe des Gelenks 8. Dieser Wulst 3a gibt auf seiner Innenseite dem Profil 6 eines darüberliegenden Klapprahmens 3 Halt, siehe Figur 5. Ferner gibt der Wulst 3a auch einen zusätzlichen Halt einem Deckel, da er in die Nut 2c formschlüssig eingreift.

Die Teile werden sicher aneinandergehalten, wenn außen Befestigungsbänder herumgelegt werden. Zusätzlich oder alternativ ist aber auch folgendes möglich:
In dem Bereich, in dem ein Boden an einem Klapprahmen, ein Deckel an einem Klapprahmen oder ein Klapprahmen an einem zweiten Klapprahmen anliegt, kann eines der beiden Teile ein Verriegelungsteil in Form eines Schiebeelementes 10 aufweisen, das innen gleitend und von Hand verschieblich gelagert ist und mindestens ein vorstehendes Hakenteil 10a aufweist, das ein Teil 11 hintergreift oder übergreift, das am benachbarten Behälterteil angeformt ist. Hierbei kann das Teil 11 durch Öffnungen soweit in das andere Teil hineingreifen, daß das Hakenteil 10a unsichtbar bleiben kann. Alternativ oder zusätzlich können aber auch Einsteckteile 12 vorgesehen sein, die durch Öffnungen eines Teils geführt werden und in einer damit fluchtenden Öffnung des benachbarten anliegenden Teils einrastend eingreifen.

Eine weitere Alternative ist in den Figuren 8 und 9 dargestellt. Hier sind die Außenwände nicht wie bei den vorherigen Ausführungen von einem klappbaren Rahmen gebildet, sondern von einem feststehendem Rahmen 13, der doppelwandig ausgebildet ist in Form eines umlaufenden Profils mit einem H-förmigen Querschnitt, wobei dieses Profil die Verdoppelung des Profils des Grundrahmens 4 ist. Es sind also zwei U-förmige Profilbereiche übereinander gesetzt, wobei der untere Profilbereich sich nach unten und der obere Profilbereich sich nach oben öffnet. Dieser Rahmen 13 kann auf der Oberseite in gleicher Weise durch eine Deckel 2 oder durch einen Boden 1 und an der Unterseite durch einen Deckel 2 oder einen Boden 1 verschlossen werden.

Die Seitenwände 7 weisen außen Versteifungsrippen 15 auf oder sind doppelwandig ausgeführt, so daß die Innen- und Außenseite im wesentlichen frei von Vorsprüngen sind.

Werden große Behäler auf zwei, drei oder vier kleine Behälter gestellt, deren Gesamtfläche der des großen Behälters entspricht (Modulbauweise), so wird vorgeschlagen, daß die Unterseite des Deckels 2 paarweise Vorsprünge, insbesondere Stege 16 aufweist, zwischen denen die oberen Ränder von Seitenwänden 7 darunterliegender Behälter formschlüssig einliegen.

## Patentansprüche

1. Zusammenklappbarer Transportbehälter in Quaderform insbesondere als Mehrwegtransportverpackung mit einem Boden (1), einem Deckel (2) und mindestens einem zwischen Boden und Deckel lösbar befestigbaren, die Seitenwände bildenden Klapprahmen (3), dessen Inneres eine Öffnung (5) bildet, deren Querschnitt dem waagerechten Innenquerschnitt des Behälters entspricht, **dadurch gekennzeichnet,**
- daß der Klapprahmen (3) einen Grundrahmen (4) mit geringer Bauhöhe aufweist,
- dessen Außenseiten etwa innerhalb der senkrechten Außenseiten des Behälters liegen und
- an dem Seitenwände (7) angelenkt sind, die bei gefülltem Behälter senkrecht stehen und bei leerem Behälter jeweils nach innen in eine waagerechte Lage geklappt sind.

2. Behälter nach Anspruch 1, **dadurch gekennzeichnet,** daß die Seitenwände (7) am Grundrahmen (4) oben und/oder unten angelenkt sind.

3. Behälter nach Anspruch 1 oder 2, **dadurch gekennzeichnet,** daß die vier Seiten des Grundrahmens (4) in den Ecken aneinander unbeweglich fest sind.

4. Behälter nach einem der vorherigen Ansprüche, **dadurch gekennzeichnet,** daß der Boden (1) mit seiner Oberseite an der Unterseite des Grundrahmens (4) und mit seiner Unterseite an der Oberseite des Deckels (2) oder an der Oberseite des aufgeklappten Klapprahmens (3) formschlüssig lösbar befestigbar ist.

5. Behälter nach einem der vorherigen Ansprüche, **dadurch gekennzeichnet,** daß der Deckel (2) mit seiner Unterseite an der Oberseite des aufgeklappten als auch des zugeklappten Klapprahmens (3) formschlüssig lösbar befestigbar ist.

6. Behälter nach Anspruch 5, **dadurch gekennzeichnet,** daß der Deckel (2) mit einer auf der Unterseite am Rand angeordneten Nut (2c) die oberen Ränder der aufgeklappten Seitenränder (7) übergreift.

7. Behälter nach Anspruch 6, **dadurch gekennzeichnet,** daß der Deckel (2) mit seiner Nut (2c) ein Inlay (14) übergreift, das mit seinen Rändern über die oberen Ränder der aufgeklappten Seitenwände (7) gelegt ist.

8. Behälter nach einem der vorherigen Ansprüche, **dadurch gekennzeichnet,** daß der Deckel (2) mit seiner Oberseite an der Unterseite des Bodens (1) formschlüssig lösbar befestigbar ist.

9. Behälter nach einem der vorherigen Ansprüche, **dadurch gekennzeichnet,** daß der Grundrahmen (4) mit seiner Unterseite an der Oberseite des Bodens (1) und an der Oberseite eines zweiten Grundrahmens (4) in dessen aufgeklappten und zusammengeklappten Zustand formschlüssig lösbar befestigbar ist.

10. Behälter nach einem der vorherigen Ansprüche, **dadurch gekennzeichnet,** daß zwischen Boden (1) und Deckel (2), zwischen zwei Böden (1) und/oder zwischen zwei Deckeln (2) ein Grundrahmen (13) ohne klappbare Seitenwände aus Kunststoff und/oder Pappe formschlüssig einsetzbar ist. (Figuren 8, 9)

11. Behälter nach einem der vorhergehenden Ansprüche 4 bis 10, **dadurch gekennzeichnet**, daß mindestens eine der lösbaren Verbindungen eine Verriegelung aufweist.

12. Behälter nach Anspruch 11, **dadurch gekennzeichnet,** daß die Verriegelung ein waagerecht bewegliches Schiebeelement (10) aufweist, das mit mindestens einem vorstehendem Hakenteil (11) einen Bereich des anliegenden festzumachenden Behälterteils hintergreift. (Figur 10)

13. Behälter nach Anspruch 11, **dadurch gekennzeichnet,** daß mindestens eine der lösbaren Verbindungen ein stift- oder plattenförmiges Einsteckteil (12) aufweist. (Figur 11)

14. Behälter nach Anspruch 11, **dadurch gekennzeichnet,** daß mindestens eine der lösbaren Verbindungen eine Klammer aufweist.

15. Behälter nach einem der vorherigen Ansprüche, **dadurch gekennzeichnet,** daß die Seitenwände, der Boden und/oder der Deckel außen Rippen (15) aufweisen.

16. Behälter nach einem der vorherigen Ansprüche, **dadurch gekennzeichnet,** daß die Seitenwände, der Boden und/oder der Deckel doppelwandig sind.

17. Behälter nach einem der vorherigen Ansprüche, **dadurch gekennzeichnet,** daß die Unterseite des Deckels (2) paarweise Vorsprünge, insbesondere Stege (16) aufweist, zwischen denen die oberen Ränder von Seitenwänden (7) darunterliegender Behälter formschlüssig einliegen.
